# EUROPEAN PATENT APPLICATION

(11) **EP 3 474 206 A1**
(43) Date of publication of application: **24.04.2019**
(21) Application number: 18201266.6
(22) Date of filing: 18.10.2018
(51) Int. Cl.: G06Q 10/08

(54) **VEHICLE AND SYSTEM FOR DELIVERY IN SAID VEHICLE**

(30) Priority: 20.10.2017 JP 2017203749
(71) Applicant: TOYOTA JIDOSHA KABUSHIKI KAISHA, Toyota-shi, Aichi-ken, 471-8571 (JP)
(72) Inventor: QIU, Zekai, TOYOTA-SHI, AICHI-KEN, 471-8571 (JP); KITAOKA, Hironobu, TOYOTA-SHI, AICHI-KEN, 471-8571 (JP); YAMAMURO, Naoki, TOYOTA-SHI, AICHI-KEN, 471-8571 (JP); KOSHO, Kozo, TOYOTA-SHI, AICHI-KEN, 471-8571 (JP); SUGIYAMA, Hiroaki, TOYOTA-SHI, AICHI-KEN, 471-8571 (JP); IKEGAMI, Makoto, TOYOTA-SHI, AICHI-KEN, 471-8571 (JP)
(74) Representative: Cabinet Beau de Loménie

(57) **Abstract**

A vehicle (2) includes a home delivery box (21) in which a deliverer places a delivery item (W), a vehicle-mounted communication device (25) configured to communicate with a server (5) provided outside, a position information acquisition device (23) configured to acquire position information, a power storage device (27) configured to store electric power for driving the vehicle-mounted communication device (25) and the position information acquisition device (23), and a processor (20). When the processor (20) acquires, from the server (5), information indicating that a user has selected the home delivery box (21) as a delivery destination of the delivery item (W), the processor (20) starts transmission of the position information to the server (5) through the vehicle-mounted communication device (25).

## Description

This nonprovisional application is based on Japanese Patent Application No. 2017-203749 filed on October 20, 2017 with the Japan Patent Office, the entire contents of which are hereby incorporated by reference.

### BACKGROUND

### Field

The present disclosure relates to a vehicle and a delivery system.

### Description of the Background Art

A communication system described in the Japanese Patent Laying-Open No. 2007-328477 includes a plurality of vehicles, and a report management center configured to communicate with the plurality of vehicles.

The report management center monitors cameras and the like arranged at intersections and the like to sense occurrence of an accident and calculate accident occurrence time and position information. When the report management center senses occurrence of an accident, the report management center requests the vehicles to provide accident information.

Then, if a vehicle has the accident information requested from the report management center, the vehicle transmits the information to the report management center.

### SUMMARY

The inventor of the present application has been studying a delivery system which can deliver a delivery item to a vehicle equipped with a home delivery box, and the vehicle.

The delivery system under study includes a vehicle equipped with a home delivery box, an input device through which a user inputs various types of information, and a server configured to communicate with the vehicle and the input device.

The vehicle includes a vehicle-mounted communication device configured to communicate with the server, a position information acquisition device configured to acquire position information, and a battery. The battery stores electric power for driving the vehicle-mounted communication device and the position information acquisition device.

In the delivery system configured as described above, if the user designates the home delivery box mounted in the vehicle as a delivery destination, the server has to transmit, to a deliverer, the position information of the vehicle designated as the delivery destination. Accordingly, the server has to acquire the position information from the vehicle.

If the vehicle is configured to perform communication even while it is parked, the server can request the vehicle to transmit the position information.

However, if the vehicle is maintained in a state where it can always perform communication, it is necessary to always activate the position information acquisition device, the vehicle-mounted communication device, and a vehicle ECU mounted in the vehicle. To always activate the position information acquisition device, the vehicle-mounted communication device, and the vehicle ECU, the battery always has to supply electric power to the vehicle-mounted communication device and the vehicle ECU.

The time for which the vehicle is parked is long. In addition, if the position information acquisition device and the like are always activated in consideration of a case where the home delivery box of the vehicle is designated as a home delivery destination, most of the electric power stored in the battery may be consumed wastefully.

The present disclosure has been made in view of the aforementioned problem, and an object thereof is to provide: a delivery system including a vehicle equipped with a home delivery box, a user terminal through which a user inputs various types of information, and a server configured to communicate with the vehicle and the user terminal; and the vehicle used for the system, which can suppress wasteful consumption of electric power stored in a battery mounted in the vehicle.

A vehicle in accordance with the present disclosure includes a home delivery box in which a deliverer places a delivery item, a vehicle-mounted communication device configured to communicate with a server provided outside, a position information acquisition device configured to acquire position information, a power storage device configured to store electric power for driving the vehicle-mounted communication device and the position information acquisition device, and a processor. When the processor acquires, from the server, information indicating that a user has selected the home delivery box as a delivery destination of the delivery item, the processor is configured to start transmission of the position information to the server through the vehicle-mounted communication device.

According to the vehicle described above, the position information is transmitted after sensing that the user has designated the home delivery box mounted in the vehicle as the delivery destination of the delivery item. Thus, power consumption of a battery can be made low, when compared with a case where the position information is always transmitted to the server.

The vehicle described above further includes a drive unit configured to drive a driving wheel, and an operation device configured to be operated by a vehicle user and switch between activation and stop of the drive unit. In a state where the drive unit is stopped by operation of the operation device, the processor is configured to intermittently communicate with the server.

According to the vehicle described above, examples of the state where the drive unit is stopped include a case where the vehicle is parked. Generally, the time for which the vehicle is parked is much longer than the time for which the vehicle is traveling. In addition, in the vehicle described above, power consumption of the battery is decreased by intermittently communicating with the server in such a case where the drive unit is stopped.

A delivery system in accordance with the present disclosure is a delivery system including: a vehicle including a home delivery box; a user terminal through which a delivery user inputs various types of information; and a server configured to communicate with the vehicle and the user terminal. The vehicle includes a position information acquisition device configured to acquire position information, a vehicle-mounted communication device configured to communicate with the server, and a battery configured to store electric power for driving the position information acquisition device and the vehicle-mounted communication device. When the delivery user selects the home delivery box as a delivery destination of a delivery item using the user terminal, the user terminal is configured to transmit, to the server, request information in which the home delivery box is designated as the delivery destination. When the vehicle acquires, from the server, information indicating that the delivery user has selected the home delivery box as the delivery destination of the delivery item, the vehicle is configured to transmit the position information to the server.

The delivery system described above further includes a deliverer terminal configured to notify a deliverer who will deliver the delivery item to the home delivery box about various types of information. When the server acquires the position information from the vehicle, the server is configured to transmit the position information to the deliverer terminal.

In the delivery system described above, the vehicle includes a drive unit configured to drive a driving wheel, and an operation device configured to be operated by a vehicle user and switch between activation and stop of the drive unit. In a state where the drive unit is stopped by operation of the operation device, the vehicle is configured to intermittently communicate with the server.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a block diagram schematically showing a delivery system 1.
Fig. 2 is a block diagram schematically showing a vehicle 2.
Fig. 3 is a block diagram showing a configuration of a deliverer terminal 3.
Fig. 4 is a block diagram schematically showing a user terminal 6.
Fig. 5 is a diagram schematically showing request information.
Fig. 6 is a block diagram schematically showing a configuration of a server 5.
Fig. 7 is a diagram schematically showing a delivery item database.
Fig. 8 is a diagram schematically showing a registered vehicle database.
Fig. 9 is a diagram schematically showing a deliverer database.
Fig. 10 is a diagram schematically showing a QR code database.
Fig. 11 is a diagram schematically showing a request information database.
Fig. 12 is a diagram showing a state diagram of delivery system 1.
Fig. 13 is a diagram showing a state diagram of delivery system 1.

### DESCRIPTION OF THE PREFERRED EMBODIMENTS

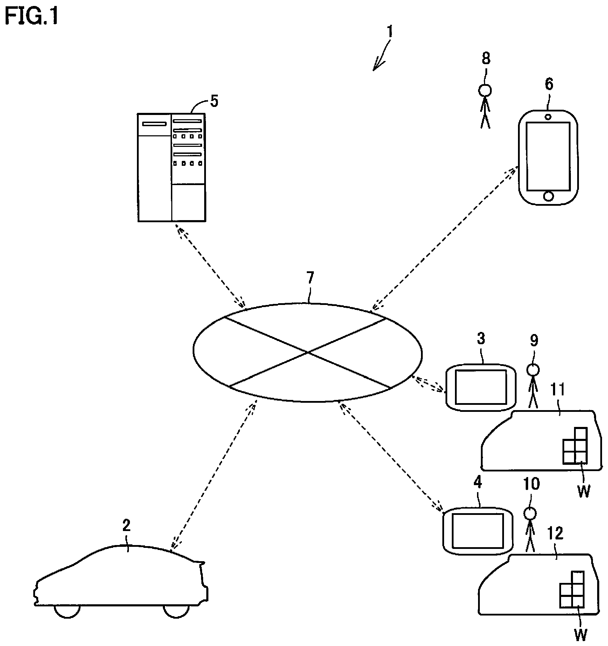

Referring to Figs. 1 to 13, a delivery system 1 in accordance with the present embodiment will be described. Among the components shown in Figs. 1 to 13, the same or substantially the same components are designated by the same reference characters, and the description thereof will not be repeated.

Fig. 1 is a block diagram schematically showing delivery system 1. Delivery system 1 includes a vehicle 2, deliverer terminals 3 and 4, a server 5, a user terminal 6, and the Internet 7.

Vehicle 2, deliverer terminals 3 and 4, server 5, and user terminal 6 are configured to communicate with one another through the Internet 7.

User terminal 6 is a terminal used by a user 8 who utilizes delivery system 1. Examples of user terminal 6 include a personal computer, a smart phone, a mobile phone, and the like.

User 8 can input various types of information using user terminal 6. For example, user 8 can designate a home delivery box mounted in vehicle 2 as a delivery destination of a delivery item W.

Deliverer terminal 3 is a terminal carried by a deliverer 9, and deliverer terminal 4 is a terminal carried by a deliverer 10. Deliverer terminals 3 and 4 notify deliverers 9 and 10 about various types of information.

Deliverer 9 delivers a plurality of delivery items W to designated delivery destinations using a delivery vehicle 11, and deliverer 10 delivers a plurality of delivery items W to designated delivery destinations using a delivery vehicle 12.

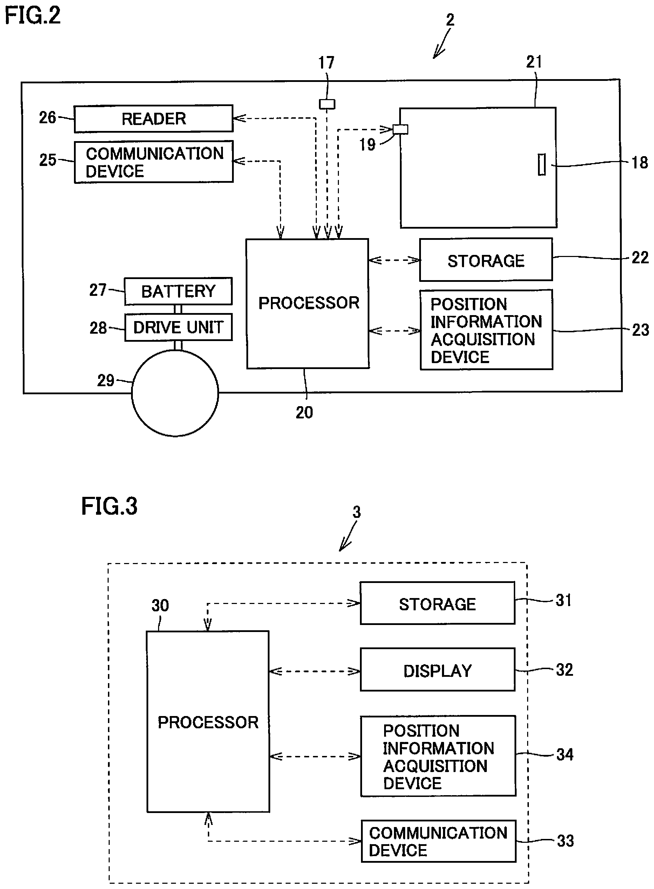

Fig. 2 is a block diagram schematically showing vehicle 2. Vehicle 2 includes a switch 17, a door 18, a locking device 19, a processor 20, a home delivery box 21, a storage 22, a position information acquisition device 23, a communication device (vehicle-mounted communication device) 25, a reader 26, a battery 27, a drive unit 28, and driving wheels 29.

Processor 20 is configured to perform processing computation using information acquired through communication device 25, information stored in storage 22, and the like. The processing computation by processor 20 is implemented by software, or by hardware such as an electrical circuit.

Home delivery box 21 is for accommodating delivery item W. Home delivery box 21 includes door 18 provided on the outside of vehicle 2. By opening door 18, deliverer 9, 10 can place delivery item W within home delivery box 21. Locking device 19 is configured to lock door 18 in a closed state. It should be noted that locking device 19 releases a locked state of door 18 in response to an instruction from processor 20.

Storage 22 is a non-volatile memory, and stores various types of information. Position information acquisition device 23 is configured to acquire position information of a current location of vehicle 2. As a method of acquiring the position information of vehicle 2 , a method of acquiring the position information through WiFi (Wireless Fidelity), a method of acquiring the position information using a GPS (Global Positioning System), or the like can be adopted. The position information acquired by position information acquisition device 23 is transmitted to processor 20.

Communication device 25 is configured to communicate with server 5 and the like, through the Internet 7. Reader 26 is configured to read a QR code. Reader 26 transmits acquired information to processor 20.

Battery 27 is configured to supply electric power to processor 20, storage 22, position information acquisition device 23, communication device 25, reader 26, and drive unit 28. Battery 27 is a lithium ion secondary battery, a lead storage battery, or the like, for example.

Drive unit 28 is configured to generate a driving force for driving driving wheels 29 using the electric power from battery 27.

Drive unit 28 includes a DCDC converter, an inverter, and a motor, for example. The DCDC converter boosts the voltage of direct current (DC) power supplied from battery 27 and supplies the DC power to the inverter. The inverter converts the DC power into alternating current (AC) power and supplies the AC power to the motor. The motor is driven by the AC power supplied from the inverter to drive driving wheels 29.

Switch (operation device) 17 is configured to be operated by a vehicle user. When switch 17 is turned ON by the vehicle user, switch 17 transmits an activation signal to processor 20. Upon receiving the activation signal, processor 20 activates drive unit 28.

Thereby, for example, when a shift lever not shown is operated from "P (parking range)" to "D (drive range)" and further an accelerator pedal not shown is depressed, processor 20 drives drive unit 28 to drive driving wheels 29.

In addition, when switch 17 is ON, processor 20, position information acquisition device 23, communication device 25, and reader 26 are activated. Specifically, when switch 17 is ON, position information acquisition device 23 always acquires the current position information. Further, communication device 25 is also activated, and is in a state where it can always communicate with server 5.

In contrast, when switch 17 is OFF, locking device 19, position information acquisition device 23, communication device 25, reader 26, and drive unit 28 are not activated. Locking device 19 is in a state where it locks door 18.

On the other hand, processor 20 is intermittently activated. Then, when processor 20 is activated, processor 20 communicates with server 5 through communication device 25.

Thus, when switch 17 is set to OFF, power consumption of battery 27 is reduced by stopping driving of various instruments.

It should be noted that, in the present embodiment, vehicle 2 is an electric vehicle, and drives driving wheels 29 only with the driving force of the motor of drive unit 28.

It should be noted that vehicle 2 is not limited to an electric vehicle, and may be a hybrid vehicle, or an engine vehicle including a drive unit not provided with a motor, for example. It should be noted that, when vehicle 2 is an engine vehicle, battery 27 is an auxiliary battery, and for example, a lead storage battery or the like is adopted as battery 27.

Fig. 3 is a block diagram showing a configuration of deliverer terminal 3. Deliverer terminal 3 includes a processor 30, a storage 31, a display 32, a communication device 33, and a position information acquisition device 34.

Processor 30 is configured to perform various types of processing computation based on information acquired through communication device 33, information stored in storage 31, and the like. The processing computation by processor 30 may be performed by software, or may be performed by hardware such as an electrical circuit.

Storage 31 is a non-volatile memory. Storage 31 stores various types of information. Display 32 is a screen for notifying deliverer 9 about various types of information. Display 32 is a touch-sensitive liquid crystal display, for example. Deliverer 9 can perform various operations using display 32. Thus, display 32 also functions as an input device through which deliverer 9 performs various operations. Communication device 33 is configured to communicate with server 5 through the Internet 7. Position information acquisition device 34 is configured to acquire position information of deliverer terminal 3.

Position information acquisition device 34 transmits the acquired position information to processor 30. Processor 30 constantly transmits the position information to server 5 through communication device 33.

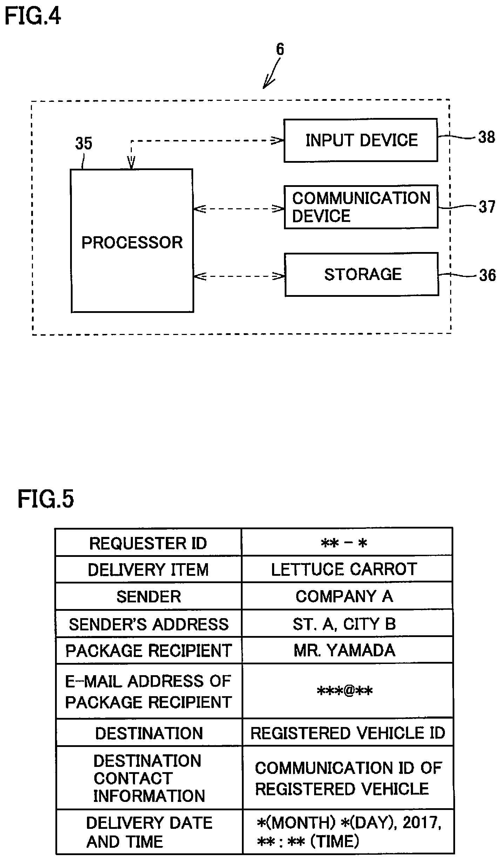

Fig. 4 is a block diagram schematically showing user terminal 6. User terminal 6 includes a processor 35, a storage 36, a communication device 37, and input device 38.

Input device 38 is a touch-sensitive liquid crystal display, for example. User 8 can acquire various types of information through input device 38. Further, input device 38 also functions as an operation device configured to be operated by user 8, and user 8 can input various types of information using input device 38.

Storage 36 is a non-volatile memory, and stores various types of information. Communication device 37 is configured to communicate with server 5, user terminal 6, and the like, through the Internet 7.

Processor 35 performs various types of processing computation using information stored in storage 36, information input to input device 38, information acquired through communication device 37, and the like. The processing computation by processor 35 is performed by software, or by hardware such as an electrical circuit.

For example, there may be a case where user 8 designates vehicle 2 as a delivery destination of a commodity using input device 38. In this case, processor 35 transmits request information to server 5 based on the information input to input device 38 and the like.

Fig. 5 is a diagram schematically showing the request information. The request information includes a requester ID, a delivery item, a sender, a sender's address, a package recipient, an e-mail address of the package recipient, a destination, destination contact information, delivery date and time, and the like.

The requester ID is information for specifying user 8. The delivery item is a commodity for which user 8 has requested home delivery.

User 8 can designate a registered vehicle registered beforehand, for example, as the destination. In this case, a registered vehicle ID is stored in the "destination". As the delivery date and time, date and time designated by user 8 is stored.

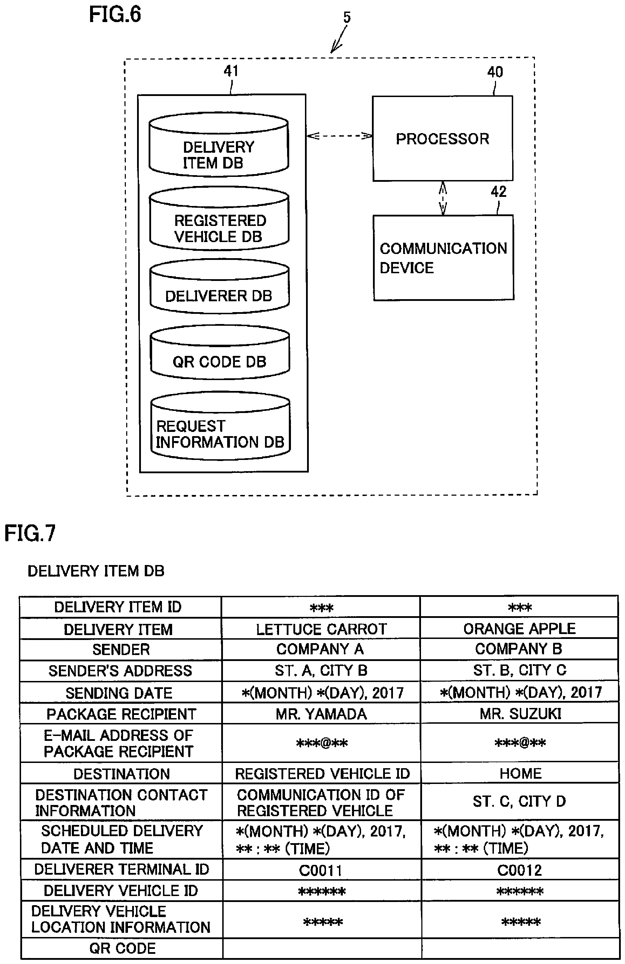

Fig. 6 is a block diagram schematically showing a configuration of server 5. Server 5 includes a processor 40, a storage 41, and a communication device 42. Communication device 42 is configured to communicate with user terminal 6, deliverer terminals 3 and 4, and vehicle 2, through the Internet 7.

Processor 40 is configured to perform processing computation based on information stored in storage 41, information acquired through communication device 42, and the like. The processing computation by processor 40 is performed by software, or by hardware such as an electrical circuit.

Storage 41 includes a delivery item database, a registered vehicle database, a deliverer database, a QR code database, and a request information database.

Fig. 7 is a diagram schematically showing the delivery item database. The delivery item database includes a delivery item ID, a delivery item, a sender, a sender's address, a package recipient, an e-mail address of the package recipient, a destination, destination contact information, and the like.

When a vehicle is designated as a destination, a registered vehicle ID is stored therein. The details of the registered vehicle ID will be described later.

When a registered vehicle ID is stored in a destination, a communication ID of vehicle 2 (communication ID of a registered vehicle) specified by the registered vehicle ID is stored in the destination contact information. When a home is stored in a destination, an address of the home is stored in the destination communication information.

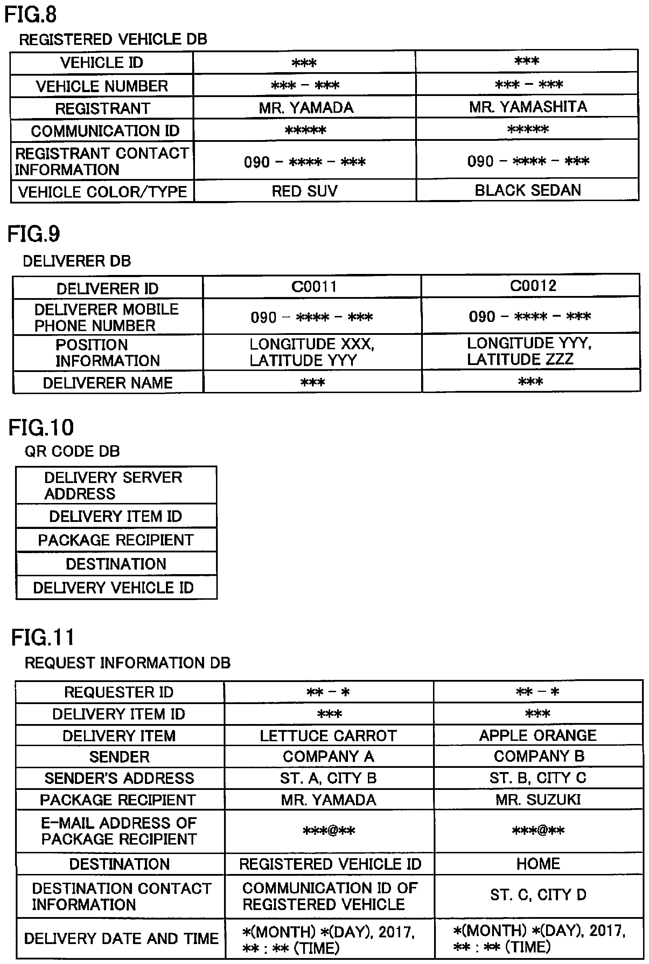

Fig. 8 is a diagram schematically showing the registered vehicle database. The registered vehicle database stores a registered vehicle ID, a vehicle number (number indicated on a license plate attached to a vehicle), a registrant, a communication ID, contact information of the registrant, and the like. The registered vehicle database also stores information such as a vehicle type (sedan, SUV, or the like) and a vehicle color.

In delivery system 1 of the present embodiment, vehicle 2 which can be designated as a delivery destination is a vehicle registered beforehand. A delivery user can register the vehicle as a delivery destination in a homepage or the like of a delivery company, through user terminal 6 or the like.

Fig. 9 is a diagram schematically showing the deliverer database. The deliverer database stores a deliverer ID, a deliverer mobile phone number, position information, and a deliverer name.

It should be noted that, when deliverer terminal 3, 4 has a call function, a phone number of deliverer terminal 3, 4 is stored in the deliverer mobile phone number. Position information of each deliverer terminal is updated based on position information always or intermittently transmitted from deliverer terminal 3, 4.

Fig. 10 is a diagram schematically showing the QR code database. In the example shown in Fig. 10, the QR code database includes a server address, a delivery item ID, a package recipient, a destination, and a deliverer ID.

Fig. 11 is a diagram schematically showing the request information database. The request information database includes a requester ID, a delivery item ID, a delivery item, a sender, a sender's address, a package recipient, an e-mail address of the package recipient, a destination, destination contact information, and the like.

It should be noted that information stored in the request information database is created and updated by processor 40 based on the request information received from user terminal 6 of each user 8.

Based on the request information database, processor 40 assigns a deliverer who will deliver each delivery item, and creates the delivery item database.

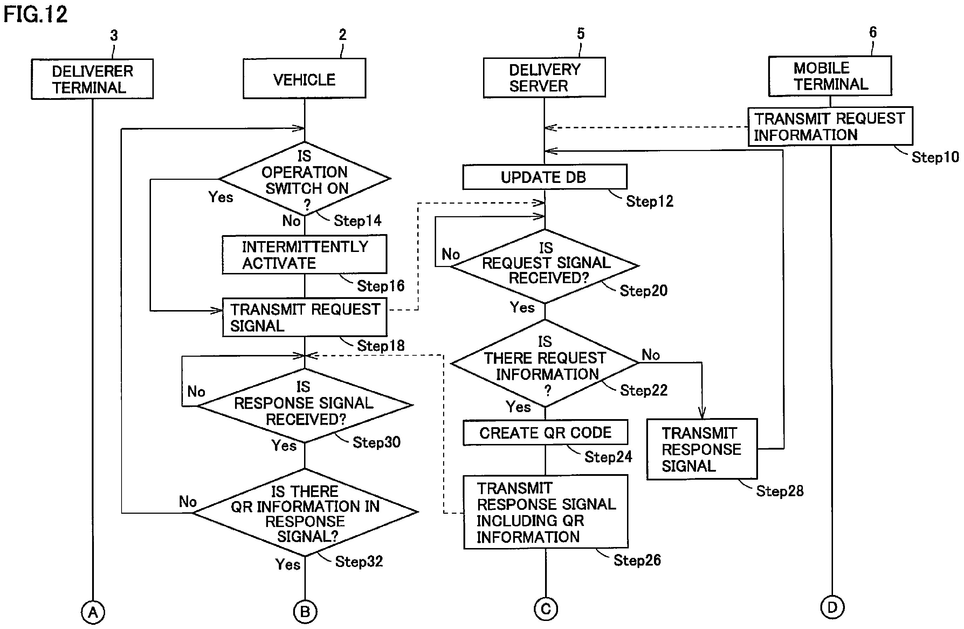

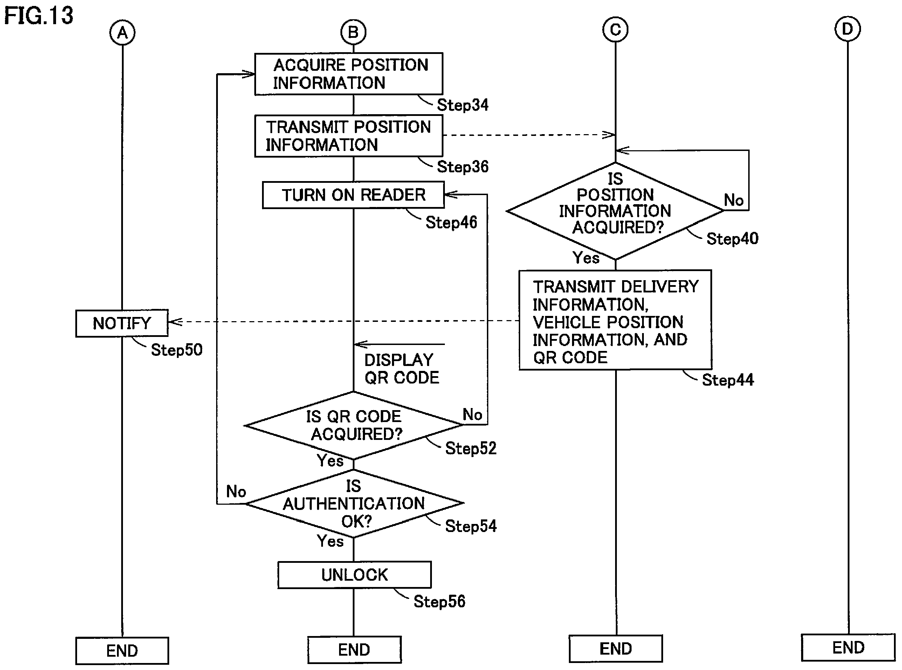

An operation of delivery system 1 configured as described above will be described with reference to Figs. 12, 13, and the like. User 8 transmits request information to server 5 using user terminal 6 (Step 10). This request information includes the various types of information shown in Fig. 5.

When processor 40 of server 5 acquires the request information, processor 40 updates the request information database (Step 12). Then, processor 40 sets a deliverer who will deliver a requested commodity using the request information database, the deliverer database, and the like, and processor 40 updates the delivery item database.

Processor 20 of vehicle 2 determines whether switch 17 is ON (Step 14). When switch 17 is OFF, processor 20 is intermittently activated (Step 16), and transmits a request signal (Step 18). Further, when processor 20 determines that switch 17 is ON (Yes in Step 14), processor 20 transmits a request signal (Step 18). This request signal includes a registered vehicle ID of the vehicle. It should be noted that, in Step 16, processor 20 is activated every 15 minutes, for example.

After processor 40 of server 5 updates the database (Step 12), processor 40 determines whether the request signal is received from vehicle 2 (Step 20). Then, when processor 40 determines that the request signal is not received from vehicle 2 (No in Step 20), processor 40 waits until the request signal is received.

When processor 40 of server 5 determines that the request signal is received (Yes in Step 20), processor 40 determines whether or not there is request information corresponding to vehicle 2 (Step 22). The request signal transmitted from vehicle 2 includes the registered vehicle ID of vehicle 2. Processor 40 determines whether the request information database has a "destination" in which the registered vehicle ID of vehicle 2 is stored.

Then, when processor 40 determines that the request information corresponding to vehicle 2 which has transmitted the request signal is received (Yes in Step 22), processor 40 creates a QR code (registered trademark) corresponding to the request information, and information included in the QR code (QR information) (Step 24).

It should be noted that the information included in the QR code includes the information shown in Fig. 10, and the information included in the QR code is created based on the delivery item database.

Processor 40 of server 5 transmits a response signal including the QR information to vehicle 2 which has transmitted the request signal (Step 26). It should be noted that the request signal includes the registered vehicle ID of vehicle 2 which has transmitted the request signal. Thus, processor 40 acquires a communication ID of vehicle 2 which has transmitted the request signal, using the registered vehicle database. Then, using the communication ID, processor 40 transmits the response signal including the QR information to vehicle 2 which has transmitted the request signal.

When processor 40 determines in Step 22 described above that the request information corresponding to vehicle 2 which has transmitted the request signal is not received (No in Step 22), processor 40 transmits a response signal not including the QR information (Step 28), and thereafter returns to Step 12 again.

After processor 20 of vehicle 2 transmits the request signal (Step 18), processor 20 waits until the response signal is received (Step 30). Then, when processor 20 determines that the response signal is received (Yes in Step 30), processor 20 determines whether the QR information is included in the response signal (Step 32). If the QR information is included in the response signal, it means that user 8 has designated vehicle 2 as a delivery destination. By receiving the response signal including the QR information, vehicle 2 can learn that vehicle 2 has been designated as a home delivery destination.

When processor 20 of vehicle 2 determines that the QR information is included in the response signal (Yes in Step 32), processor 20 activates position information acquisition device 23, and acquires the current position information from position information acquisition device 23 (Step 34).

When processor 20 acquires the position information, processor 20 transmits the position information to server 5 through communication device 25 (Step 36). It should be noted that this position information includes the registered vehicle ID of vehicle 2.

When processor 20 of vehicle 2 transmits the position information (Step 36), processor 20 activates reader 26. It should be noted that processor 20 is always activated after transmitting the position information.

After processor 40 of server 5 transmits the response signal including the QR information (Step 26), processor 40 waits until it acquires the position information (Step 40). Then, when processor 40 acquires the position information (Yes in Step 40), processor 40 transmits delivery information, the vehicle position information, and the QR code, to deliverer terminal 3 (Step 44).

The delivery information includes a deliverer terminal ID of deliverer terminal 3, of the delivery item database shown in Fig. 7. It should be noted that the QR code is stored for each registered vehicle ID. The vehicle position information includes vehicle position information for each registered vehicle ID.

When processor 30 of deliverer terminal 3 acquires the delivery information, the QR code, and the vehicle position information from server 5, processor 30 notifies deliverer 9 that it acquires various types of information (Step 50). Then, deliverer 9 moves to vehicle 2 based on the acquired position information of vehicle 2. When deliverer 9 comes close to vehicle 2, deliverer 9 operates deliverer terminal 3 to cause the QR code to be displayed on display 32. Then, deliverer 9 passes display 32 displaying the QR code over reader 26.

Processor 20 of vehicle 2 waits with reader 26 being activated, until the QR code is acquired through reader 26 (Steps 46, 52).

When reader 26 acquires the QR code, reader 26 transmits an image of the QR code to processor 20. When processor 20 determines that the QR code is acquired (Yes in Step 52), processor 20 performs authentication (Step 54).

Specifically, based on the acquired QR code, processor 20 reads information included in the QR code, and authenticates whether it matches the QR information acquired in Step 32.

Then, when processor 20 determines that the information read from the QR code does not match the QR information acquired beforehand (No in Step 54), processor 20 returns to Step 34.

On the other hand, when the information read from the QR code matches the QR information acquired beforehand, processor 20 unlocks locking device 19 (Step 56). Thereby, deliverer 9 can place delivery item W within home delivery box 21.

As described above, according to delivery system 1 in accordance with the present embodiment, in the state where switch 17 is set to OFF, processor 20 and communication device 25 are intermittently activated, and the request signal is intermittently transmitted to server 5.

Thus, various types of information can be acquired from server 5 while reducing power consumption of battery 27. Further, after processor 20 of vehicle 2 acquires the QR information, processor 20 transmits the position information acquired by position information acquisition device 23 to server 5. Thus, power consumption of battery 27 can be made low, when compared with a case where the position information is always transmitted to server 5.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

## Claims

1. A vehicle (2) comprising:
a home delivery box (21) in which a deliverer is to place a delivery item (W);
a vehicle-mounted communication device (25) configured to communicate with a server (5) provided outside;
a position information acquisition device (23) configured to acquire position information;
a power storage device (27) configured to store electric power for driving the vehicle-mounted communication device (25) and the position information acquisition device (23); and
a processor (20),
when the processor (20) acquires, from the server (5), information indicating that a user has selected the home delivery box (21) as a delivery destination of the delivery item (W), the processor (20) being configured to start transmission of the position information to the server (5) through the vehicle-mounted communication device (25).

2. The vehicle according to claim 1, further comprising:
a drive unit (28) configured to drive a driving wheel (29); and
an operation device (17) configured to be operated by a vehicle user and switch between activation and stop of the drive unit (28), wherein
in a state where the drive unit (28) is stopped by operation of the operation device (17), the processor (20) is configured to intermittently communicate with the server (5).

3. A delivery system (1) comprising:
a vehicle (2) including a home delivery box (21);
a user terminal (6) configured to receive various types of information inputted by a delivery user; and
a server (5) configured to communicate with the vehicle (2) and the user terminal (6),
the vehicle (2) including a position information acquisition device (23) configured to acquire position information, a vehicle-mounted communication device (25) configured to communicate with the server (5), and a battery (27) configured to store electric power for driving the position information acquisition device (23) and the vehicle-mounted communication device (25),
when the delivery user selects the home delivery box (21) as a delivery destination of a delivery item (W) using the user terminal (6), the user terminal (6) being configured to transmit, to the server (5), request information in which the home delivery box (21) is designated as the delivery destination,
when the vehicle (2) acquires, from the server (5), information indicating that the delivery user has selected the home delivery box (21) as the delivery destination of the delivery item (W), the vehicle (2) being configured to transmit the position information to the server (5).

4. The delivery system according to claim 3, further comprising a deliverer terminal (3, 4) configured to notify a deliverer who will deliver the delivery item (W) to the home delivery box (21) about various types of information, wherein
when the server (5) acquires the position information from the vehicle (2), the server (5) is configured to transmit the position information to the deliverer terminal (3, 4).

5. The delivery system according to claim 3 or 4, wherein
the vehicle (2) includes
a drive unit (28) configured to drive a driving wheel (29), and
an operation device (17) configured to be operated by a vehicle user and switch between activation and stop of the drive unit (28), and
in a state where the drive unit (28) is stopped by operation of the operation device (17), the vehicle (2) is configured to intermittently communicate with the server (5).
